# EUROPEAN PATENT SPECIFICATION

(11) **EP 0 544 776 B1**
(45) Date of publication and mention of the grant of the patent: **03.04.1996**
(21) Application number: 91915568.9
(22) Date of filing: 23.08.1991
(51) Int. Cl.: B62H 1/12

(54) **IMPROVED STABILIZER DEVICE FOR LEARNING TO RIDE A BICYCLE**
VERBESSERTES STABILISIERUNGSMITTEL FÜR DAS ERLERNEN DES FAHRRADFAHRENS
APPAREIL STABILISATEUR AMELIORE POUR APPRENDRE A FAIRE DE LA BICYCLETTE

(30) Priority: 29.08.1990 GB 9018828
(43) Date of publication of application: 09.06.1993
(73) Proprietor: GOOD, Raymond John, Menai Bridge, Gwynedd LL59 5RD (GB)
(72) Inventor: GOOD, Raymond John, Menai Bridge, Gwynedd LL59 5RD (GB)
(74) Representative: Lyons, Andrew John
(86) International application number: GB9101428
(87) International publication number: WO9204227

(56) References cited:
- FR-A- 770 123
- FR-A- 1 064 977
- FR-A- 1 087 400
- GB-A- 749 616
- US-A- 2 647 764
- US-A- 4 615 535

## Description

The present invention relates to an improved adjustable stabilizer device for a bicycle or tricycle and normally two of such devices will be provided for a bicycle - one either side of the rear wheel. In the case of the tricycle a pair of the said devices would replace the tricycles rear wheels and part of their supports.

It is known to fit stabilizers to a bicycle to assist in learning to ride the bicycle and such are subsequently removed once the rider is confident and able to balance. A known stabilizer comprises a wheel rotatably mounted in fixed position at the lower outer end of an L-shaped bracket with the other end or end portion of the bracket being secured to the rear spindle. An inclined bracing strut may be provided between the ends of the bracket for additional strength. To accommodate for different sized bicycles, the mounting bracket has been provided with a single vertically arranged line of apertures to enable appropriate and only vertical adjustment of the mounting bracket. This adjustment can only be intermittent because of the gaps between the apertures. Two such similar and known stabilizers have been fitted one on each side of a bicycle. Another attachment, to the L-shaped bracket, has been provided to stop it rotating about the spindle. This is usually attached to the bicycle's chain stay at its other end. Known stabilizer wheels are set at a fixed distance laterally away from the bicycle's rear wheel and must suddenly be removed completely from the stabilizer wheel position that the learner rider started learning in, so leaving him or her with no further assistance in balancing. Known tricycles rear wheels are similarly set at a fixed lateral distance apart and cannot be moved closer together to gradually improve the learner rider's balance.

FR-A-1064977 shows a stabilizer device which can be adapted to fit different cycles with different size of wheel. It has the stabilizer wheel carried at the end of mounting means which is disposed inclined with respect to the normal upright position of the cycle and its height is adjustable. This results in simultaneous adjustment of the horizontal and vertical position of the stabilizer wheel to adapt to the cycle wheel size.

It has therefore now been realised that such known stabilizers only provide a limited training effect and not progressive degrees of stabilization depending upon the stage of bicycle balancing development of the user and this may be particularly relevant with handicapped persons where a progressive training by way of stabilizers is important.

According to the present invention there is provided a cycle stabilizer device comprising support means supporting a stabilizer wheel or other rolling ground-engaging means having an axis of rotation, and mounting means for mounting the support means on a cycle; characterised in that said ground-engaging means is laterally adjustably securably locatable, horizontally or substantially horizontally nearer to or further from any vertical plane, which intersects said mounting means and is orientated along the normal direction of travel of the cycle when said device is in its normal operating position on an upright cycle; wherein upon the said lateral adjustment of said ground-engaging means its axis of rotation remains, or is adjustable to be, at right angles or substantially at right angles to said plane.

Generally reference will be made subsequently to a stabilizing or stabilizer wheel although other rolling ground-engaging means may be provided such as rollers or ball type wheels as are known.

Generally references will be made subsequently either to bicycles fitted with improved stabilizer devices or to the devices themselves. These references are to be taken as applying also to tricycles where appropriate, particularly in the case of lateral adjustability.

The wheel supporting means of this improved stabilizer will usually be continuously upwardly and downwardly adjustable relative to the bicycle in its normal upright position of use.

The lateral and fine continuous vertical adjustability of the stabilizing wheel position enables the restoring moment exerted and the amount the bicycle must tilt when the wheel engages the ground to be adjusted as the proficiency of the learner rider increases. The lateral and fine continuous vertical adjustability of the stabilizer wheel is intended to mean adjustment of the position of the stabilizer wheel to enable, before use, the position of the stabilizer wheel relative to the bicycle to be adjusted to achieve different restoring moments and different degrees of inclination from upright of a bicycle having the device thereon when the stabilizer wheel engages the ground.

Also according to the invention an improved stabilizer device for a bicycle comprises mounting means for mounting stabilizer wheel support means on a bicycle and having adjustment means enabling the wheel support means to be adjustable substantially vertically and wherein said support means carries a stabilizing wheel adjustable laterally for example along its spindle in the support means, at right angles in plan to the rear bicycle wheel. The adjustment of the said stabilizer wheel may alternatively, for example, be by adjustment of the mounting position of the wheel on the support means or by a pivoting or twisting of the support means about a substantially vertical axis parallel or substantially parallel to the plane of the upright bicycle's rear wheel, to adjust the spacing of the stabilizer wheel from the bicycle's rear wheel. In the latter instance a further parallel pivoting or twisting means is needed at the end of the support means furthest from the rear wheel of the bicycle. This will enable the stabilizer wheel plane to be refixed parallel with the rear bicycle wheel plane after pivoting adjustment of the support means.

Thus, at first the stabilizer wheels will have maximum lateral spacing from the mounting means and bicycle rear wheel and may be positioned close to the ground as well so that the stabilizing wheel on one side engages the ground even with minor "wobble" or tilting of the bicycle towards that side and then provides the rider with a considerable restoring moment but as the learner rider progresses in proficiency the lateral and/or vertical location of the wheel relative to the bicycle and mounting means is adjusted in stages, as gradual as prove necessary, so that the lateral spacing between the stabilizer wheel and the bicycle rear wheel is gradually reduced until eventually the support means and stabilizer wheel can be removed.

* The adjustment of the stabilizing wheel laterally relative to the mounting means and bicycle rear wheel when attached to the bicycle may be by way of mounting the stabilizer wheel so as to be adjustable in position along a central axle which extends laterally of the mounting means and thus of the bicycle when fitted thereto and suitable adjustable securing means will be provided to maintain the stabilizer wheel in any required position on the axle. Alternatively, the support means such as a support arm may be mounted so as to be adjustable in position or be extendable and retractable so as to enable the position of the stabilizing wheel to be adjusted laterally relative to the support means. For example, the support means may be a substantially L-shaped arm or bracket with the stabilizing wheel mounted at the free end of the horizontal limb with said stabilizing wheel being rotatable about a horizontal axle whilst said axle itself is adjustably pivotable about an upwardly extending axis; the end of the other limb of the L-shaped support arm which extends in use substantially vertically being adjustably and pivotably mounted in the mounting means mountable on said bicycle with said upwardly extending arm being pivotable about its own axis so as to adjust the lateral spacing of the stabilizing wheel and being securable in position and with said pivotal support arm of the support means preferably also being infinitely finely and continuously adjustable in said mounting means about an upwardly extending axis and securable at any desired position. The mounting of the stabilizing wheel spindle support arm so as to be adjustable pivotally about it's upwardly extending axis and preferably vertical or near vertical axis enables the stabilizing wheel to be adjusted in use so as to be parallel to the main wheel of the bicycle for different positions of adjustment of the L-shaped support arm. Still further, alternatively, a support arm may be provided extending laterally of support means and being adjustable in length e.g. by being telescopic or otherwise and be securable in the required position of use.

The mounting means may be provided as an integral portion of the bicycle e.g. as an extension to the plate uniting the rear forks and bicycle chain stay which latter extends substantially horizontally between the pedal hub and rear wheel spindle, or may be a suitable mounting block or bracket fixed to said uniting plate or a rear fork and/or chain stay with the support means being removable in each instance once the rider has learnt to ride without stabilizing wheels.. The mounting means may be appropriately adapted for the left and right-hand sides of a bicycle or be usable without adaptation on both sides of a bicycle. The mounting means when provided as an attachment may have two extension arms or a bifurcated portion which may engage either side of the chain stay to prevent turning of the mounting means about the bicycle's rear wheel spindle when the stabilizer is knocked in use. In a simple embodiment of the mounting means such, for example, partly comprises an apertured strap locatable, via an aperture, on the rear wheel spindle and held thereon by the nut and having curved extension arms securable to the chain stay by a nut and bolt and U-shaped strap. The extension arms, when so secured, prevent the rotation of the stabilizer about the bicycle spindle.

The mounting means may comprise an apertured substantially horizontally extending plate locatable by an aperture therein on the rear wheel spindle and held thereon by the nut and having an end bent back towards itself to form, in use and viewed in plan, an open ended loop shaped clamp around the perimeter of the supporting means' vertical limb, tightenable by one or more sets of nuts and bolts to hold the supporting means in any required position of adjustment.

In some forms in addition to a main stabilizing or stabilizer wheel, as mentioned previously, an additional stabilizer wheel or emergency wheel of smaller exterior diameter than the main stabilizer wheel will be provided laterally outwardly of the main stabilizer wheel so that should the bicycle tilt further than the main stabilizer wheel is able to compensate for and should the bicycle begin to topple, then said smaller emergency wheel touches the ground and provides an additional supporting effect and tilt warning to the rider and also prevents the end of the support arm from catching on the ground - this is especially important when the main stabilizer wheel has been adjusted to a position relatively close to the mounting means and bicycle.

The support means may as mentioned, be mounted so as to be adjustable vertically to suit different bicycle sizes and to provide for appropriate continuous fine vertical adjustment of the device on individual bicycles and said support means may have elongated upwardly extending overlapping slots in 2 or more vertical parallel rows or a single longer continuous such slot to accommodate bicycle spindle nuts for the above mentioned purposes

It is also envisaged that the substantially vertical limb of the support means may in some forms of stabilizers be mounted or mountable so as to be adjustably inclinable or fixed inclined out of vertical in such a way as to permit, if variable, once set up, the variation of vertical spacing of the stabilizer wheel from the ground with the bicycle upright to be accomplished automatically as the stabilizer wheel is moved in, in the versions of the device which pivot about a vertical or near vertical axis. Where the stabilizer wheel moves inwards along a fixed spindle this can be permanently inclined to the horizontal to achieve the same effect.

Also according to the present invention there is provided a bicycle having improved stabilizer means on opposite sides of the bicycle and comprising support means for supporting a wheel adjustable laterally with respect to the bicycle to enable the spacing of the wheel from the bicycle to be adjusted. The adjustment may be along a line transverse to the plane in which the bicycle rear wheel lies or substantially parallel to the axle of the rear bicycle wheel. Preferably the support means will be adjustable upwardly and downwardly relative to the bicycle in its normal upright position and possibly also adjustable about an inclined axis.

The invention will be described further, by way of example, with reference to the accompanying drawings, in which:-
Fig. 1 is a perspective view from the front and above of a first embodiment of a stabilizer device according to the invention for attachment to the right-hand side of a bicycle; this embodiment would require right and left-handed versions; the embodiments shown in the other Figs. can have their parts turned round or assembled differently to suit both sides of the bicycle;
Fig. 2 is a perspective view from above and the rear of a stabilizer device forming a second embodiment of the present invention and assembled ready for attachment to the right-hand side of the bicycle;
Fig. 3 is a perspective view from above and to the rear of a stabilizer device assembled ready for attachment to the right-hand side of a bicycle wherein an L-shaped support arm is vertically adjustable in the mounting means and wherein the horizontal portion of said arm extends at right angles to the rear wheel of the bicycle and has a main stabilizer wheel adjustable therealong and has an additional smaller stabilizer wheel at the end thereof;
Fig. 4 is a perspective view from above and the rear illustrating a stabilizer device attached to a right-hand bicycle chain stay and rear bicycle wheel spindle end and forming a fourth embodiment according to the invention:
Fig. 5 illustrates a modification of the mounting means of Fig. 4 where the main L-shaped support bar is mounted in front of rather than behind the rear wheel bicycle spindle;
Fig. 6 is a perspective view from above and the rear having mounting means similar to the embodiment of Fig. 2 and with a modification of the stabilizer wheel adjustment means illustrated in Fig. 4;
Fig. 7 is a fragmentary detail showing alternative means for adjustment of the horizontal axle of the stabilizer wheel and comprising a modification of that of Fig. 6;
Fig. 8 is a perspective view from the rear and above of a further embodiment according to the invention wherein the stabilizer wheel (not shown) is mounted on the support arm in a similar manner to t t of Fig. 7 but wherein the mounting means is modified and may comprise a separate part or parts of the bicycle; and
Fig. 9 illustrates a detail of an alternative mounting means.
Figs. 10 and 11 are perspective views, from the rear and above, of embodiments of the invention which provide some of the rear parts of tricycles including the tricycle's rear wheels.
Fig. 12 is a perspective view, from the rear and above, of a clamp type mounting means.

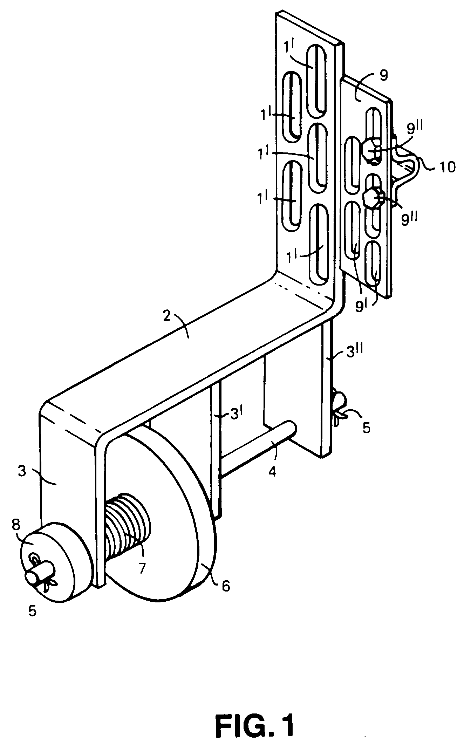

An embodiment of a stabilizer device is illustrated in Fig. 1 and comprises stabilizer wheel support means in the form of a substantially L-shaped support arm 1 having a horizontal limb or portion 2 from which three support arms 3, 3', 3" extend downwardly therefrom and support a spindle 4 extending through apertures in each and being secured by split pins 5 at each end. A main stabilizer wheel 6 is provided rotatable on spindle 4 and is adjustable in its position along spindle 4 by removal of the spindle 4 and repositioning of the stabilizing wheel 6 therealong. Suitable washers 7 or other devices acting as spacers will be provided on the spindle 4 and suitably arranged to achieve the required location of the wheel 6 which is held in position thereby or by a pair of hose clips or grub-screwed sleeves (not shown) which grip the spindle. It has been found of advantage to include devices such as two or more loose washers adjacent to each other on the stabilizer spindle which make a rattling noise when the stabilizer wheel 6 is rotating so as to warn the rider when the stabilizer is meeting the ground. Arrangements could be made for different noises for left and right stabilizers to warn the rider which stabilizer is meeting the ground. This could for example be achieved by using different sized or different shaped washers on the two stabilizers. Whilst only three downwardly extending members 3, 3', 3" are illustrated as sub-dividers and supports for the spindle more of such may be provided as appropriate. An additional emergency stabilizer wheel 8 is provided of smaller outer diameter than the main stabilizer wheel 6 and such is located at the end of the spindle 4 remote from the mounting means 1, 9, 10 and acts to prevent or restrain toppling over of the bicycle (not shown) in an extreme tilting motion and also prevents the end of the spindle 4 from digging into the ground when the bicycle tilts. The slots 1' take the threaded end of the rear bicycle wheel spindle and the spindle nut and sometimes washer are tightened onto the support arm.

The upwardly extending portion 1 of the support arm has five elongated upwardly extending vertically overlapping slots 1', staggered in two vertical rows for enabling the height of the stabilizer relative to the bicycle spindle end nut to be continuously and finely varied and adjusted vertically as necessary to suit particular use and provide requisite clearance prior to operation of the stabilizer wheel and forms part of the mounting means. Alternatively one single longer vertical slot could replace said five slots. The mounting means also comprises a plate 9 extending from limb portion 1 and having upwardly extending elongate slots 9' therein through which the shanks of bolts 9" pass to threadingly engage in a profiled plate 10 shaped to fit around the bicycle chain stay (not shown) to permit mounting of the whole device, as appropriate. These five slots 9' would be arranged to suit the other five slots 1' and similarly one long slot could be arranged to suit the one single longer vertical slot mentioned above.

It is to be appreciated that in all of the embodiments therein whilst only one stabilizer device is illustrated for the right-hand side of the bicycle, a similar device will be provided for the left-hand side of the bicycle and appropriately modified or turned around as will be readily apparent.

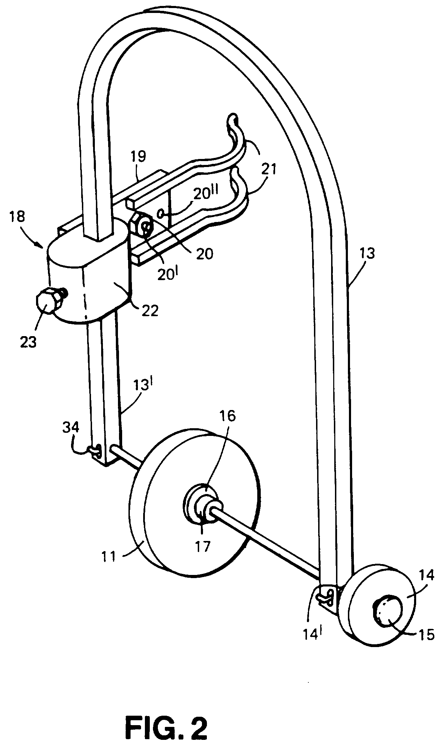

A modification of the embodiment of Fig. 1 is illustrated in Fig. 2 wherein a main stabilizer wheel 11 is adjustably mounted on a spindle 12 which itself is carried by support means in the form of a substantially inverted U-shaped member 13 with the spindle 12 being held in position thereon at each end for example by split pins 34 extending therethrough and also through the limbs of the U-shaped member 13 with said spindle being extended beyond the support member 13 at one end and carrying an additional wheel 14 acting as an emergency wheel and being of smaller diameter than the main stabilizer wheel 11. An end cap 15 is provided for the spindle 12. A suitable loose washer 14' can be provided between the wheel 14 and the support 13. Another such loose washer can be provided between the wheel 14 and the end cap 15. This washer is hidden behind end cap 15 in Fig. 2.

The main stabilizer wheel 11 is rotatably mounted on spindle 12. This wheel has a loose washer 16 also rotatably mounted on spindle 12 on either side of it. Immediately beyond these two washers are two adjustable locating means 17, (only one of these is visible in Fig. 2). The said adjustable locating means 17 comprise for example hose clips or grub-screwed sleeves either side of the main stabilizer wheel 11 to grip spindle 12 and so hold wheel 11 in position for each of its positions of adjustment.

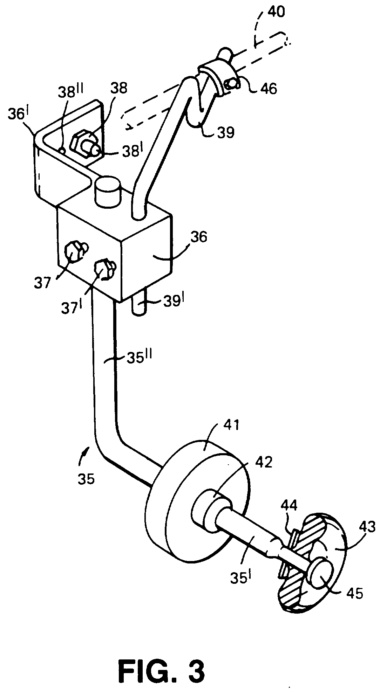

In the arrangement of Fig. 2 the mounting means 18 comprises a main backing plate 19 having an aperture therein through which the threaded end of the bicycle wheel spindle 20' extends and is secured by spindle nut 20. An alternative aperture 20" is provided in backing plate 19 for the wheel spindle at the same horizontal level. This allows alternative forward or backward horizontal adjustment of the mounting means relative to the bicycle which may for example allow obstructions on the bicycle to be avoided by the assembled stabilizer. The two or more horizontally level holes could be replaced by a horizontally elongated slot or slots. Two locating arms 21 extend forwardly from mounting plate 19 and are shaped and arranged to fit over and under the bicycle chain stay (40 in Fig. 3). These locating arms act to prevent turning of the stabilizer about its fixing at the wheel spindle. A mounting block 22 is fixed to plate 19 and has a passage extending therethrough shaped to correspond to the shape of the part of the support member 13' which extends therethrough in slidable manner. A grub-screw 23 is located in a threaded hole in block 22 to engage with limb 13' of support member 13. As mentioned the grub-screw 23 acts to hold the support member 13 at a required position of adjustment and such enables infinitely variable vertical adjustment over the vertical length of limb 13'. The aperture in the block 22 may, for example, be square or round to correspond to the section of limb 13' of the support member 13 and in this the embodiment is of square section. This square section is to prevent turning of the support member 13 in plan view, within block 22 if the support member 13 or its attached wheels should be knocked in use.

The stabilizer device illustrated in Fig. 3 comprises a support means in the form of an L-shaped arm or bar 35 which has an upwardly extending limb 35" slidable in an upwardly extending passage in a mounting block 36. The limb 35" is secured in position by means of a grub-screw 37 in tapped hole in block 36. A mounting extension arm 36' extends from block 36 and has an aperture therein for the passage of the bicycle wheel spindle 38' and securement by spindle wheel nut 38 to the plate at the base of the rear fork of the bicycle (not shown). An additional part of the mounting means in the form of an inverted substantially U-shaped arm or "swan-neck" 39 is provided having the base of the end of its horizontal projection flattened in some versions for better and increased contact area on the bicycle chain stay tube 40 illustrated in broken line. The swan-neck 39 has an upwardly extending portion 39' extending through and slidable in a passage in block 36. The swan neck 39 is securable in position by a grub-screw 37' extending through tapped hole in mounting member 36 to permit requisite securement. The swan-neck prevents knocks received by the stabilizer causing rotation of the stabilizer assembly about the bicycle spindle.

This above swan-neck arrangement allows adjustment and attachment to suit many bicycle model's chain stays which are above, at, or below bicycle rear spindle level, to avoid many obstructions such as chain guards and also sometimes to be attached to the bicycle's rear forks where the preferable chain stay attachment is not possible.

The horizontal or nearly horizontal limb 35' of the L-shaped support arm 35 has a main stabilizing wheel 41 rotatably mounted thereon and held in position between two hose clips or sleeves with grub screws on either side 42 (only one being visible in Fig. 3). The main stabilizing wheel 41 is thus adjustable as desired along the limb 35'. Limb 35' of the L-shaped support arm may be inclined slightly from the horizontal (with the bicycle upright) in such a way that the stabilizer wheel will be automatically raised from, or more likely lowered towards, the ground as it is adjusted inwardly towards the rear bicycle wheel. This automatic raising or lowering would be accomplished without any vertical adjustment of the support means in the mounting means being required. The end of limb 35' is preferably of reduced diameter to receive an additional stabilizer wheel or emergency wheel 43 of smaller outside diameter than the main stabilizer wheel 41. This emergency wheel 43, shown partly cut away, prevents the end of limb 35' catching on the ground and also provides second stage ground contact after the main stabilizer wheel in most of its positions, in the case of excessive tilting or toppling. This emergency wheel 43 provides rider assistance in addition to that provided by the main stabilizer wheel. This assistance is available and especially appropriate when the latter has been moved fairly well inwardly towards the bicycle rear wheel (not shown). The wheel 43 may have a suitable loose washer 44 or loose washers on both sides. Wheel 43 may be held in position by an end cap 45 mounted on the spindle 35' or by means of a split pin or the like (not shown) at the outer end. At the inner end the increased spindle diameter keeps wheel 43 from moving inwards towards the bicycle rear wheel. It is to be observed that in this embodiment the horizontal spindle i.e. limb 35' remains at or near right-angles in plan to the rear bicycle wheel throughout use. A strap 46 or hose clip is provided to hold the swan-neck 39 rigidly against the chain stay 40. As with Fig. 2 two alternative and horizontally level holes (visible one labelled 38") are provided for the bicycle's rear wheel spindle for the same reasons mentioned in the description of Fig. 2.

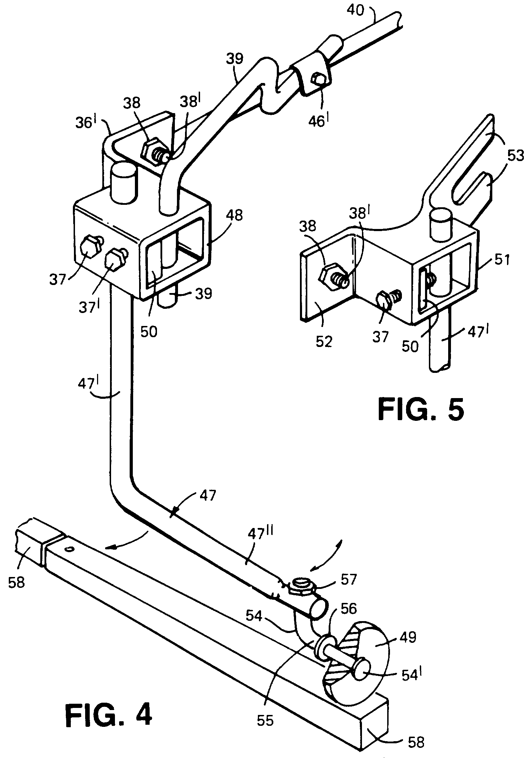

In the embodiment of Fig. 4 the support means comprises an L-shaped support arm 47 adjustably mounted in mounting means 48 and carrying a stabilizer wheel 49 (shown partly cut away) at its free-end.

The upwardly extending limb 47' of support arm 47 extends through passages in a box-like mounting bracket 48 forming part of the mounting means similar to block 36 in Fig. 3. The limb 47' is vertically adjustable in bracket 48 and securable by means of a grub screw 37, extending through the box section and through a loose plate 50 tapped for receiving the grub screw, or through captive nuts, or the tapped wall of the member shown. Thus the position of the L-shaped arm 47 is infinitely variable and adjustable as required. In a similar manner to the embodiment of Fig. 3 a mounting extension arm 36' extends from mounting box 48 for mounting on the bicycle's rear wheel spindle 38' and securement by spindle nut 38. A swan-neck 39 is adjustably mounted in box 48 and securable by means of a grub screw 37' extending through loose tapped plate 50. The other end of swan-neck 39 is clamped to bicycle chain stay 40 by means of a strap 46' having apertures for a nut and bolt securement. A hose clip may be used instead of the strap 46' and its bolt and nut. The threading arrangements to receive grub screw 41 would normally be the same or similar to those described above for grub screw 37.

An alternative modification of the mounting means of Fig. 4 is illustrated in Fig. 5. Here a box-like mounting member 51 is provided with passages for adjustment of upwardly extending limb 47' which is securable by means of grub-screw 37 extending through loose tapped plate 50. In this arrangement the main support means 47' is located in front of the rear wheel spindle 38' and nut 38 of the bicycle (not shown). Here a rearwardly extending flange 52 of the mounting member 51 is provided with an aperture for the rear wheel spindle 38'. The mounting member 51 also has two forwardly extending arms or a bifurcated portion 53 which fit over and under or fits the bicycle chain stay 40. In either arrangements of the mounting means of this embodiment, the stabilizer wheel 49 is mounted at the distal end of the support means 47 at the end of substantially horizontal support arm 47" by way of a substantially L-shaped spindle 54. The spindle 54 has a horizontal portion on which the wheel 49 is rotatably mounted and held between a split pin 55 and loose washer 56 and an end cap 54' for retaining the wheel 49 in position. The spindle 54 is adjustably mounted on the free-end of limb 47" by means of nuts 57 on a threaded portion of the spindle which extends through a passage in the end of limb 47" with said nuts 57 being above and below the main limb 47" and tightened to hold the L-shaped spindle 54 in the required position (the bottom nut being hidden). The pivotable mounting of the spindle 54 is to enable the position of the stabilizer wheel 49 to be adjusted back to sensibly parallel with the bicycle rear wheel once the position of the pivotable support arm 47 has been adjusted to achieve the requisite lateral spacing of the wheel 49 from the mounting means and rear bicycle wheel.

In other words in this embodiment rather than displacement of a stabilizing wheel along a spindle as in the previous embodiments, the spacing of the stabilizer wheel 49 from the main support means 48 is achieved by a pivotable action of the limb 47' in the support box 48 when grub screw 37 is released. The outer end of the substantially horizontal limb 47" will thus move in an arc either forwardly or rearwardly towards or away from the bicycle rear wheel. The vertical limb 47' can be secured in position by way of grub screw 37 when the requisite spacing of the wheel 49 away from the bicycle rear wheel is achieved. Since the horizontal end of the limb 47 moves in an arc it is necessary to release nuts 57 and adjust the position of the wheel 49 at the end of limb 47' so that it's axle is parallel to the axle of the rear wheel of the bicycle.

In this embodiment whilst a single wedge may be used, a pair of wedges 58 are illustrated and are used to aid in the setting up if required so that both wheels 49 (only one shown) of the devices secured to the left and right-hand side of the bicycle are appropriately spaced at the same suitable approximate height above flat ground level. The two wedges 58 are juxtaposed with their toes against each other under, or against, the main wheel (not shown) of the bicycle. The spacing there being approximately the minimum height difference needed to ensure that the rear bicycle wheel touches the ground and can drive the bicycle along the ground (i.e. the bicycle rear wheel should not be held up too much by the stabilizer wheels 49). The higher outer end of each wedge would be sized for the first learning stabilizer wheel position to ensure that some reasonable but safe non-toppling amount of tilting could occur before the stabilizer wheel in its outer position contacted the ground. The wedges 58 are set transverse to the bicycle axis when being used.

In this arrangement wherein the support arm 47 is rotatable to achieve the lateral adjustment of the stabilizer wheel 49 the supporting clamps might alternatively be used which have been used in the previous embodiments wherein the support arms are fixed i.e. wherein the support arm is held at right angles to the rear bicycle wheel throughout all repositionings of the main stabilizer wheel. This applies to all the fixed supporting arms except that illustrated in Fig. 1. In Fig. 2 the vertical passage in the mounting block 22 would have to be circular or curved in section to allow rotation. (A square section passage is shown in Fig. 2).

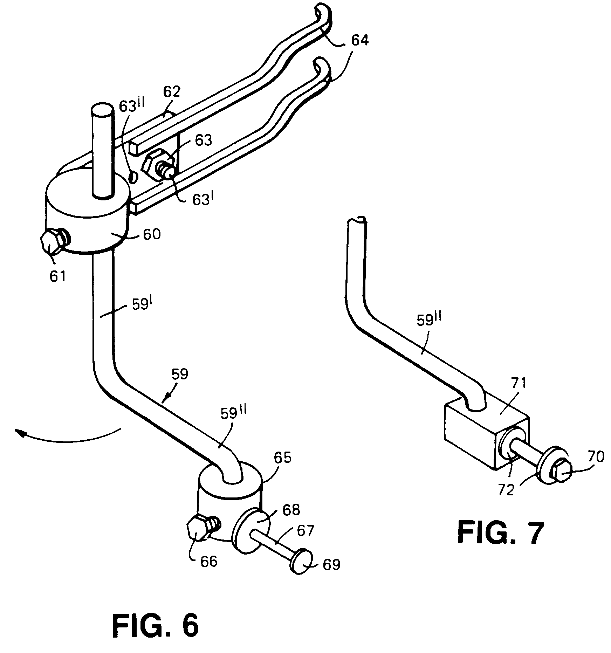

An alternative embodiment of stabilizer device is illustrated in Fig. 6 which is a modification of the embodiment with pivotal support arm illustrated in Figs. 4 and 5. In this embodiment a substantially L-shaped support arm 59 has an upwardly extending limb 59' extending through a passage in a support block 60 which has a grub screw 61 extending through a threaded passage therein to permit the limb 59' to be secured in a desired vertical position and also in any desired rotary position. This thereby achieves the requisite horizontal spacing of a stabilizing wheel (not shown in this embodiment) away from the bicycle's rear wheel. The rotation of the L-shaped support arm 59 will enable the necessary adjustment of the wheel distance, from the bicycle's rear wheel, to be achieved. A mounting plate 62 extends from mounting block 60 and has two alternative apertures for receiving the threaded spindle of the rear wheel and for location and fixing of the bicycle stabilizer by way of a bicycle spindle nut 63 threaded and tightened onto spindle 63' thereon. As with Figs. 2 and 3 these two alternative horizontally level apertures (visible one labelled 63") are provided for the bicycle's rear wheel spindle for the same reasons mentioned in the description of Fig. 2. Two locating arms 64 extend from mounting plate 62 and fit over and under a bicycle chain stay (not shown) to prevent twisting of the mounting means about the bicycle's rear wheel spindle. The end of the substantially horizontal limb 59" of the support arm is turned vertically downwards. A mounting block 65 is rotatably mounted and securable in position by means of a grub screw 66 located in a threaded passage in the block 65. A spindle 67 extends from block 65 and a rotating stabilizing wheel (not shown) is rotatably mounted thereon together with loose washer 68. The spindle end cap 69 keeps the stabilizing wheel on it's spindle. It will be appreciated that the end of limb 59" is turned down to fit into the circular hole in the end block 65. Another loose washer like 68 may be located on the spindle between the stabilizer wheel and the spindle end cap 69.

A modification of Fig. 6 is illustrated in Fig. 7 in which the detail shows an alternative arrangement wherein a bolt 70 is provided threadingly engaged in a mounting block 71 with the threaded aperture in block 71 extending into communication with the turndown end of limb 59" and such that the bolt 70 also forms a grub screw for adjustment and securement of the block 71 at the end of limb 59". The stabilizer wheel (not shown) is held captive and rotatably mounted between loose washers 72 on the unthreaded length of bolt 70. The circular hole which accommodates the vertically turned down end of limb 59" would often not pass through the base of the block 71. The block could then not be forced up, and jammed onto, the bend of limb 59". This jamming would also force the stabilizer wheel out of vertical. The blind end of the said circular hole may be penetrated by a considerably smaller hole to drain any trapped liquid.

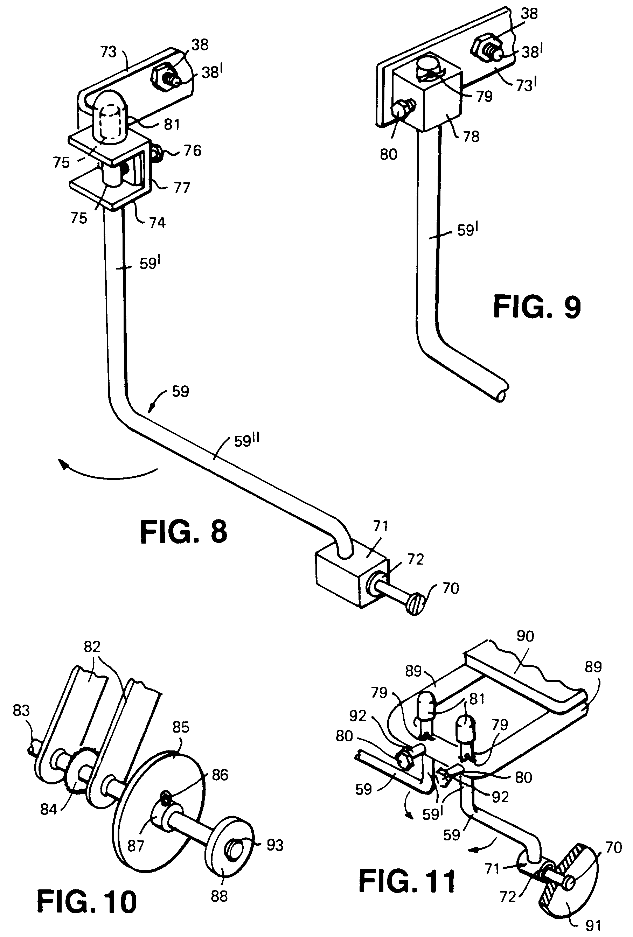

In the embodiment of Fig. 8 the stabilizing wheel (not shown but similar to 49 in Fig. 4) is mounted in a similar manner to that shown in Fig. 7 and the embodiment differs mainly in respect of the mounting means for the support arm 59. In this arrangement an extension 73 of the bicycle itself is provided by the manufacturer of the bicycle in the region of the bicycle spindle 38' and spindle nut 38 securement and has an angled end to which a U-shaped channel member 74 is fixed or forms a part thereof. The U-shaped channel member 74 is positioned substantially laid on its side and has apertures 75 in each limb through which the upwardly extending limb 59' of support arm 59 is slidably extending. The upwardly extending limb 59'is securable by means of a grub screw 76 extending through the wall of the U-shaped member 74 and through a loose tapped plate 77 to achieve the requisite securement of the limb 59'. In this embodiment the vertical adjustment of the limb 59' is possible, as also is the rotary angular displacement to achieve the necessary variable lateral spacing and positioning of the stabilizer wheel relative to the bicycle's rear wheel. The alignment of the stabilizer wheel once it's lateral spacing has been selected is achieved by way of adjusting the mounting block of the wheel to turn it, in it's new position, back to parallel with the bicycle's rear wheel.

Fig. 9 is a modification of a part of the device of Fig. 8, the extension 73' is simply a straight extension of the bicycle itself and has a mounting block 78 fixed thereto with an aperture therethrough into which the upwardly extending limb 59' slidably extends and is retained by split pin 79. A grub screw 80 enables the limb 59' to be secured in position in any rotary position of adjustment to enable the lateral position and spacing of the stabilizing wheel from mounting means 78, to be adjusted. In fact two split pins 79 are provided above and below member 78 (the bottom split pin is hidden). The member 78 is fixed rigidly to the rear wheel spindle plate of the bicycle. The hole in block 78 could alternatively be drilled so as to not quite penetrate the top of the block in order to prevent the vertical limb 59' from rising vertically above its correct position.

The direction in which the L-shaped support member would normally pivot as it is adjusted from the outermost towards the innermost position is shown by the curved arrows on Figs. 11, 8, 6 and 4. Pivotting could alternatively be forwards when this would not be in the way of the bicycle's rider.

The holes in the blocks 78 (Fig. 9) and 60 (Fig. 6), box-shaped members 48 (Fig. 4) and 51 (Fig. 5) and in U-shaped member 74 (Fig. 8) could all be positioned in some forms of stabilizer so that the holes tilt the inserted support member limb 59' ( Fig. 8) slightly out of vertical in the way mentioned below.

The top of support members limb 59' would be nearer the rear of the bicycle, in plan, than the bottom of the said limb. This tilt would be made enough to give automatic lowering of the stabilizer wheel, nearer to the ground by appropriate amounts, as the stabilizer wheel is adjusted in stages backwards and closer and closer laterally to the bicycle's rear wheel.

The split pins 79 (Fig. 9) would be provided by the bicycle manufacturer to keep the stabilizer wheel at the correct heights above ground for that particular model and size of bicycle.

When fully pushed on the soft rounded cap 81 (Fig. 8) could not only protect the user if they fell on it but also, when fully pushed on, just meet the top of the U-shaped member 74 when member 59' is correctly fitted. In that position it could be made to indicate that the support member and thus the stabilizer wheel were in the correct position.

By continuous vertical adjustability there is meant the possibility of adjustment over the whole of the range of the vertical or upward/downward adjustment compared to known devices wherein the vertical adjustment holes or slots were separated by portions of the mounting means which thus meant that adjustment in such portion regions within the adjustment range was not possible.

Whilst reference is made herein to a stabilizer device for a bicycle the device may be applied generally as a device for use in training to ride any cycle e.g. for use in training to ride a monocycle or, more likely, in the training of people to ride a bicycle, as a transition from riding a tricycle wherein two devices as described or claimed herein are provided and attached to the rear frame of a tricycle whose rear wheels have been removed. The lateral adjustability enables the spacing of the hitherto stabilizer wheels, now forming the rear support wheels, to be adjusted in spacing as required to assist in the transition to bicycle riding.

Alternatively a pair of laterally adjustable stabilizers could form an integral part of the tricycle, as manufactured, by permanently replacing the tricycle rear wheels and part of the rear of the tricycle frame.

Two possible forms of stabilizers providing some of the rear part of a tricycle are shown in Figs. 10 and 11.

In Fig. 10 the tricycle rear forks 82 support the horizontal spindle 83. This is driven by the gear wheel 84 which is itself driven by the tricycle's chain and pedals. The main stabilizer wheels 85 here form the tricycle's rear wheels. Only the right hand wheel is shown in Fig. 10. The said stabilizer wheel 85 can be adjusted laterally, between the outside of the rear forks 82 and the smaller wheel 88, along the spindle 83. The stabilizer wheel 85 can be fixed where required by tightening the grub screw 86 onto the said spindle. Grub screw 86 is threadingly engaged in a threaded hole in the sleeve 87 which is rigidly attached to wheel 85. Two further wheels 88 (only one shown) are similarly mounted, or loose turning but retained laterally, and remain near the ends of the spindle. In the latter case lateral retention could be by a split pin through the spindle and washers and end cap 93. These emergency stabilizer wheels 88 are of smaller diameter externally than the main wheels 85. The wheels 88 prevent the ends of the spindle 83 catching on the ground and also provide restoring moment when the main wheels 85 have been adjusted considerably inwardly and the tricycle tilts sufficiently when being used. This is as mentioned in connection with Fig. 1.

Fig. 11 shows the rear frame 89 and seat 90 of a tricycle supported at the rear by a pair of stabilizer devices similar to the one shown above it in Fig. 8. The vertical limbs 59' of the supporting arms 59 extend through holes in the rear of the tricycle frame 89, so preventing rotation in the plane of the stabilizer wheel 91, and are retained in position vertically by split pins 79. Grub screws 80, located in tapped holes, enable limbs 59' to be retained in any rotary position to allow adjustment of the lateral position and spacing of the stabilizer/rear tricycle wheels 91 relative to each other. In this instance bearing plates 92 are rigidly and concentrically fixed to the vertical limbs 59' to transfer the upthrust from the wheels to the tricycle frame 89. However, if plates 92 and split pins 79 were omitted vertical adjustment would be possible to allow for different sized riders. The stabilizer wheel 91 (shown partly cut away) is mounted in a similar manner to that shown in Figs. 7 and 8. Soft rounded caps 81 protect the user against the tops of the vertical limbs 59' to which they are fitted. In Fig. 11 the tricycle would be driven by the tricycle's front wheel, usually with the pedal assembly mounted directly on it's spindle.

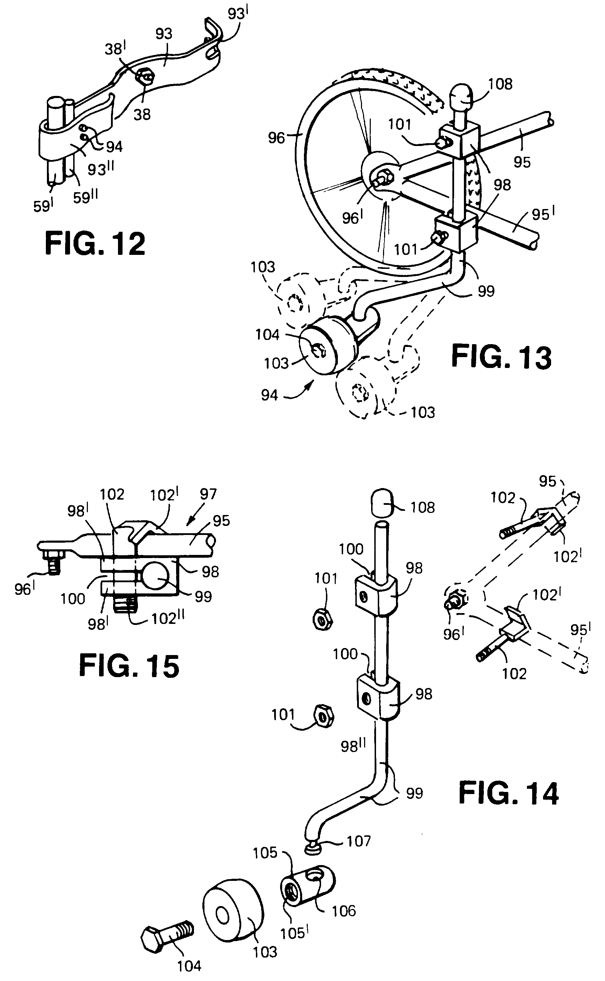

Fig. 12 shows an alternative mounting means consisting of a plate 93 locatable, via an aperture, on the bicycle rear wheel spindle 38' and held thereon by the spindle nut 38. One end of the said plate 93" is bent back towards itself to form, viewed in plan, an open ended loop shaped clamp. This clamp passes around the perimeter of the supporting means' vertical limb 59'. When the limb 59' has been slid substantially vertically up or down in the clamp to the required position the two sides of the clamp would be pulled together, to grip the limb, by tightening the two sets of nuts and bolts 94. These pass through holes in both sides of the clamp.

If the stabilizer wheel is mounted directly on the horizontal portion of the supporting means (which therefore remains at right angles to the rear bicycle wheel) an extra bar 59"' can be fixed to the vertical limb 59'. This would prevent rotation of limb 59' in the clamp if the stabilizer receives a blow in use. This extra bar 59"' would be omitted if the stabilizer wheel's lateral adjustment is by pivoting limb 59'. The far end of the plate 93' is cut and bent to form a curved fork whose arms locate above and below the bicycle chain stay.

An alternative to clamping with this type of arrangement would be to fix the doubled back part of the plate back onto itself so as to surround vertical limb 59' with little clearance. Nut and bolt sets 94 could then be replaced by a grub screw threaded into a tapped hole in the plate positioned and tightened so as to engage the substantially vertical limb 59' and hold it at the different heights required.

The grub screws shown in the Figs. are generally shown with hexagonal heads, however other sorts could be used for example socket cap screws.

Various modifications may be made without departing from the scope of the invention including the exchange of features of the various embodiments. Spring means or other shock absorbing means such as elliptical leaf springs may be provided at the end of the support means supporting the wheel to reduce vibration on rough surfaces.

Springs, for example elliptical leaf springs, or other shock absorbing means may in some forms be incorporated, probably at the outer end of the support means near the stabilizer wheel. Alternatively, for example, the whole of the support means can be made of a springy or resilient material such as spring steel. The objects would be to make cycles, fitted with this sort of stablizer, easier to ride on cambered roads and also to reduce vibrations and increase the rider's comfort on rough roads.

*It should be noted that the word 'limb' is usually used in this document in the sense that, and to indicate that, it is a portion of an object such as a substantially L-shaped arm.

A preferred embodiment is illustrated in Figs. 13-15 wherein Fig. 13 is a perspective view of one stabilizer device 94 fitted to the chain stay 95' and rear fork 95 adjacent to rear wheel 96 of a cycle, Fig. 14 is an exploded view of the device of Fig. 13 and Fig. 15 is a plan showing one of two identical mounting means 97, in position for securing to the rear fork of a cycle. Each mounting means 97, comprises a clamping block 98 having a normally vertical aperture therethrough in which an L-shaped support bar 99 is slidable. Each clamping block 98 has a slot 100 down one side extending into the vertical aperture such that when the thus formed parts 98' are drawn together by tightening a dome nut 101 on the threads 102' of a hook bolt 102 extending through holes 98" in parts 98', the block 98 flexes and bar 99 is clamped in a position of vertical adjustment. Bolts 102 each have hooked ends 102' or like fixed thereon for retaining engagement with the cycle frame 95. The mounting means 97 are readily securable in any suitable position on frames 95.

A stabilizer wheel 103 is rotatably mounted on a spindle bolt 104 which extends into an internal threaded aperture 105' of a swivel mounting member 105, with the thread handed such that rotation of wheel 103 acts to further tighten bolt 104. The aperture 105' leads into a normally blind hole 106 which receives deep circular sectioned grooved end 107 (or a flange or like retention means) of a downturned end portion of support bar 99 rotatable t erein. End of bolt 104 is releasably engageable in groove 107 (or like means) to enable wheel 103 to be adjusted and secured in positions so that its axis of rotation is parallel or substantially parallel to that of wheel 96 on axle 96' in any position of lateral adjustment of bar 99 towards or away from wheel 96. Three possible positions of bar 99 are shown in Fig. 13. A protective cap 108 is provided on the end of bar 99.

By "adjustable" there is intended to be the possibility of relocation of the stabilizing wheel in different positions, e.g. if the wheel were positionable and securable at different locations on the support means.

## Claims

1. A cycle stabilizer device comprising support means supporting a stabilizer wheel (6; 11; 41; 49; 85; 91; 103) or other rolling ground-engaging means having an axis of rotation, and mounting means (1, 9, 10; 18; 36; 58; 60; 78; 98) for mounting the support means on a cycle; characterised in that said ground-engaging means is laterally adjustably securably locatable, horizontally or substantially horizontally nearer to or further from any vertical plane, which intersects said mounting means and is orientated along the normal direction of travel of the cycle when said device is in its normal operating position on an upright cycle; wherein upon the said lateral adjustment of said ground-engaging means its axis of rotation remains, or is adjustable to be, at right angles or substantially at right angles to said plane.

2. A device as claimed in claim 1 in which, when the said device is in its normal operating position, the said stabilizer wheel or other ground-engaging means is also adjustably securably locatable substantially vertically so that the axis of rotation of the said ground-engaging means is locatable in more than one lateral and vertical coordinate position within its combined lateral and vertical adjustment ranges when the device is in its normal operating position on an upright cycle and is viewed from the front or rear of such a cycle.

3. A device as claimed in claim 1 or 2, in which the lateral adjustment of said ground-engaging means relative to said vertical plane is by a backward or forward pivoting adjustment of the support means (47; 59) in the mounting means (48; 60) about a vertical or substantially vertical axis; a further pivoting means (57; 65) having a pivotal axis parallel to said vertical or substantially vertical axis is also provided at the outer end of the support means, spaced further from the mounting means, to enable the axis of the stabilizer wheel plane to be realigned parallel with the plane of the mounting means or cycle after said pivoting adjustment of the support means, and means for securing in both the desired positions of pivotal adjustment (Figure 4).

4. A device as claimed in claim 1, in which the lateral adjustment of the said stabilizer wheel is by mounting it so as to be adjustable and securable anywhere along an axle part (4; 35'), of the support means (2, 3; 13; 35), which extends and is fixed at or substantially at right angles to the cycle frame to which it is attached.

5. A device as claimed in claim 4 in which said axle is the horizonal limb (35') of a substantially L-shaped support means.

6. A device as claimed in claim 1 in which the axis of rotation is inclined slightly out of horizonal in such a way as to alter the height of the stabilizer wheel automatically relative to the ground as it is adjusted nearer to the cycle to which it is attached.

7. A device as claimed in any one of claims 1 to 6 in which said support means is mountable on an upright bicycle viewed in plan by clamp mounting means on at least one of the rear fork, chain stay, and a plate which joins the chain stay to the rear fork, of the cycle.

8. A device as claimed in any one of claims 1 to 7, in which a support arm is provided extending laterally of support means and being adjustable in length, to a desired lateral extension from the cycle and being securable in the required position of use.

9. A device as claimed in any one of claims 1 to 8, in which the mounting means (102) is provided as an integral portion of the cycle, with the support means being removable in each instance.

10. A device as claimed in claim 1, in which the mounting means comprises, in use, a substantially horizontally extending plate locatable, via an aperture, on the bicycle rear wheel spindle and held thereon by the nut and having an end bent back towards itself to form, viewed in plan, an open ended loop shaped clamp around the perimeter of the supporting means vertical limb tightenable to hold the supporting means in any required position of adjustment.

11. A device as claimed in any one of claims 1 to 10, in which in addition to the aforesaid stabilizing wheel (11; 41) or other rolling ground-engaging means (hereinafter referred to as the main stabilizing wheel), an additional stabilizer wheel or emergency wheel (14; 43) of smaller exterior diameter than the main stabilizer wheel is provided laterally outwardly of the main stabilizer wheel such that, when the main stabilizer wheel has been adjusted nearer the main axis of the bicycle or tricycle frame, should the cycle tilt further than the main stabilizer wheel is able to compensate for and should the cycle begin to topple, then said smaller emergency wheel is such that it touches the ground and provides an additional restoring moment and tilt warning to the rider and also prevents the end of the support arm from catching on the ground.

12. A device as claimed claim 1 in which the mounting means is in two or more parts with the one part supporting the support means being one of fixed, inclined or inclinable or angularly adjustable, to permit the variation of vertical spacing of the stabilizer wheel from the ground, with the bicycle upright, to be accomplished automatically as the stabilizer wheel is moved in, towards the rear bicycle wheel, without any vertical adjustment of the support means in the mounting means being required.

13. A stabilizer device as claimed in any one of claims to 1 to 12, further comprising means which makes a noise when the stabilizer wheel contacts the ground.

14. A stabilizer device as claimed in any one of claims 1 to 13, in which respective said support means, mounting means and stabilizer wheel replace each of two laterally opposite wheels of a tricycle and are mounted so that the two stabilizer wheels are adjustable laterally near to and further from each other.

15. A stabilizer device as claimed in claim 1 in which the support means comprises a substantially L-shaped member having two limbs and which in use is positioned with one limb substantially parallel to said vertical plane and its other limb substantially horizonal when the cycle is in its normal upright operating position.

16. A stabilizer device as claimed in claim 15 in which said one limb is clamped to at least one of a rear fork, chain stay and rear wheel spindle plate of the cycle frame by said mounting means.

17. A device claimed in at least claim 1 or 2, in which said mounting means includes a clamping means comprising a clamp block (98) with a hole through it sized to slidably fit the supporting means (99) and with a slot (100) stretching from one edge of said block through to said hole to form two projections of said block; said projections being drawn together in use by a hook bolt (102), which passes through a hole in both said projections and fastens with its hooked end onto the cycle frame, said hook bolt being tightened, against said clamping block by a nut or similar means threaded onto a threaded portion at the straight end of the hook bolt, to clamp the supporting means in position and at the same time secure it to the cycle frame; in the clamping means and cycles normal positions of use, this securement is at the required vertical level in its vertical adjustment range and so that the substantially horizontal part of the support means is securable at various angles in plan to an upright cycle for lateral adjustment purposes; one or more such clamping means being used to clamp the supporting means to at least one of the chain stay, rear fork, or the plate which joins the chain stay and rear fork, of the cycle.

18. A stabilizer device as claimed in claim 15 or 16 in which said means for adjusting the axis of rotation of said stabilizer wheel comprises an adjustably securably locatable clamp by which said stabilizer wheel is secured to said other limb at a desired lateral position.

19. A stabilizer device as claimed in any one of claims 1 to 18 in which spring or other shock absorber means, are provided for the stabilizer wheel.

## Patentansprüche

1. Fahrradstützvorrichtung mit einer Trageinrichtung, welche ein Stützrad (6, 11, 41, 49, 85, 91, 103) oder eine andere auf dem Boden abrollende Einrichtung mit einer Rotationsachse trägt, und mit einer Befestigungseinrichtung (1, 9, 10, 18, 36, 58, 60, 78, 98) zur Befestigung der Trageinrichtung an einem Fahrrad dadurch **gekennzeichnet**,
daß die Boden-Kontakt-Einrichtung waagerecht oder im wesentlichen waagerecht seitlich verstellbar näher zu oder weiter von einer beliebigen senkrechten Ebene gesichert positioniert werden kann, welche durch die Befestigungseinrichtung und entlang der normalen Fahrtrichtung des Fahrrades verläuft, wenn die Vorrichtung sich an einem aufrechten Fahrrad in ihrer normalen Fahrtstellung befindet, worin nach der seitlichen Verstellung der Boden-Kontakt-Einrichtung ihre Rotationsachse im rechten Winkel oder im wesentlichen im rechten Winkel zu der Ebene bleibt oder verstellbar ist um im rechten Winkel zu dieser zu sein.

2. Vorrichtung gemäß Anspruch 1, in welcher das Stützrad oder die andere Boden-Kontakt-Einrichtung im wesentlichen auch senkrecht verstellbar gesichert positioniert werden kann, wenn sich die Vorrichtung in ihrer normalen Fahrtposition befindet, so daß die Rotationsachse der Boden-Kontakt-Einrichtung in mehr als einer seitlichen und senkrechten Koordinatenposition innerhalb ihres seitlichen und senkrechten kombinierten Verstellbereichs liegt, wenn die Vorrichtung in ihrer normalen Fahrtstellung an einem aufrechten Fahrrad ist und von vorn oder rückwärts von einem solchen Fahrrad betrachtet wird.

3. Vorrichtung gemäß Anspruch 1 oder 2, in welcher die seitliche Verstellung der Boden-Kontakt-Einrichtung in bezug auf die senkrechte Ebene durch eine Verstellung der Trageinrichtung (47, 59) durch Schwenken nach rückwärts und vorwärts in der Befestigungseinrichtung (48, 60) um eine senkrechte oder im wesentlichen senkrechte Achse erfolgt;
am äußeren Ende der Trageinrichtung in weiterem Abstand von der Befestigungseinrichtung ist eine weitere Schwenkeinrichtung (57, 65) vorgesehen, welche eine zu der senkrechten oder im wesentlichen senkrechten Achse parallele Schwenkachse besitzt, um der Stützradachsebene nach der Schwenkverstellung der Trageinrichtung zu erlauben, parallel zu der Ebene der Befestigungseinrichtung oder dem Fahrrad wieder ausgerichtet zu werden, und es sind Mittel zum Sichern in den beiden gewünschten Stellungen (Figur 4) der Schwenkverstellung vorgesehen.

4. Vorrichtung gemäß Anspruch 1, in welcher die seitliche Verstellung des Stützrades erfolgt, indem es so montiert wird, um verstellbar und gesichert irgendwo entlang eines Achsabschnitts (4, 35') der Trageinrichtung (2, 3, 13, 35) zu sein, welche sich im rechten Winkel oder im wesentlichen im rechten Winkel zu dem Fahrradrahmen erstreckt und an diesem befestigt ist, an welchem sie angebracht ist.

5. Vorrichtung gemäß Anspruch 4, in welcher die Achse der waagerechte Schenkel (35') einer im wesentlichen L-formigen Trageinrichtung ist.

6. Vorrichtung gemäß Anspruch 1, in welcher die Rotationsachse zur Waagerechten leicht geneigt ist, derart daß die Höhe des Stützrades in bezug auf den Boden automatisch verändert wird, wenn es näher zum Fahrrad verstellt wird, an welchen es angebracht ist.

7. Vorrichtung gemäß einem der Ansprüche 1 bis 6, in welcher die Trageinrichtung an einem in Draufsicht betrachtet aufrechten Fahrrad durch Klemmbefestigungsmittel an zumindest einem der folgenden Teile anbringbar ist:
an der zum Sattel führenden Hinterradgabel, an der zum Tretkurbellager führenden Hinterradgabel und an einer Platte, welche die zum Sattel führende Hinterradgabel mit der zum Tretkurbellager führenden Hinterradgabel verbindet.

8. Vorrichtung gemäß einem der Ansprüche 1 bis 7, in welcher ein Tragarm vorgesehen ist, welcher sich seitlich der Trageinrichtung erstreckt und in der Länge auf eine gewünschte Ausdehnung seitlich vom Fahrrad verstellt und in der erforderlichen Gebrauchsstellung gesichert werden kann.

9. Vorrichtung gemäß einem der Ansprüche 1 bis 8, in welcher die Befestigungseinrichtung (102) als ein Bestandteil des Fahrrads mit jederzeit abnehmbarer Trageinrichtung vorgesehen ist.

10. Vorrichtung gemäß Anspruch 1, in welcher die Befestigungseinrichtung im Gebrauch eine sich im wesentlichen waagerecht erstreckende Platte aufweist, welche durch eine Öffnung an die Hinterradachse des Zweirades mit einer Mutter befestigt wird und welche ein zu sich zurückgebogenes Ende hat, um in Draufsicht betrachtet, eine den umfang des senkrechten Schenkels der Trageinrichtung umfassende schlaufenförmige Klemme mit offenem Ende zu bilden, welche festgespannt werden kann, um die Trageinrichtung in jeder erforderlichen Verstellungsposition zu halten.

11. Vorrichtung gemäß einem der Ansprüche 1 bis 10, in welcher zusätzlich zu dem vorgenannten Stützrad (11, 41) oder einer anderen Boden-Kontakt-Einrichtung (nachfolgend als Hauptstützrad bezeichnet) ein zusätzliches Stützrad oder Notrad (14, 43) mit einem kleineren Durchmesser als das Hauptstützrad seitlich nach außen von dem Hauptstützrad vorgesehen ist, so daß dann, wenn das Hauptstützrad näher zu der Hauptachse des Zweirad- oder Dreiradrahmens verstellt wurde, sich das Fahrrad weiter neigen würde, als das Hauptstützrad fähig wäre, dies auszugleichen und würde das Fahrrad beginnen umzufallen, dann berührt das kleinere Notrad den Boden und liefert ein zusätzliches Rückstellmoment und eine Warnung vor Kippen an den Fahrer und verhindert auch, daß das Ende des Tragarms den Boden berührt.

12. Vorrichtung gemäß Anspruch 1, in welcher die Befestigungseinrichtung aus zwei oder mehreren Teilen mit demjenigen Teil besteht, welches die Trageinrichtung trägt, welches entweder fest, geneigt oder neigbar oder winkelig verstellbar ist, um zu erlauben, die Veränderung des senkrechten Abstandes des Stützrades vom Boden bei dem aufrechten Zweirad automatisch auszuführen, wenn das Stützrad nach innen zum Hinterrad des Zweirades bewegt wird, ohne daß irgendeine senkrechte Verstellung der Trageinrichtung in der Befestigungseinrichtung erforderlich ist.

13. Vorrichtung gemäß einem der Ansprüche 1 bis 12, welche ferner eine Einrichtung aufweist, die ein Geräusch erzeugt, wenn das Stützrad den Boden berührt.

14. Vorrichtung gemäß einem der Ansprüche 1 bis 13, in welcher die entsprechende Trageinrichtung, Befestigungseinrichtung und das Stützrad jedes der zwei seitlich gegenüberliegenden Räder eines Dreirades ersetzen und derart montiert sind, daß die zwei Stützräder näher zu oder weiter voneinander seitlich verstellbar sind.

15. Vorrichtung gemäß Anspruch 1, in welcher die Trageinrichtung ein im wesentlichen L-förmiges Glied mit zwei Schenkeln aufweist und welches im Gebrauch mit einem Schenkel im wesentlichen parallel zu der senkrechten Ebene und mit seinem anderen Schenkel im wesentlichen waagerecht positioniert ist, wenn das Fahrrad in seiner normalen aufrechten Fahrtstellung ist.

16. Vorrichtung gemäß Anspruch 15, in welcher der eine Schenkel mit der Befestigungseinrichtung an zumindest einem der folgenden Teile des Fahrradrahmens geklemmt ist:
an der zum Sattel führenden Hinterradgabel, an der zum Tretkurbellager führenden Hinterradgabel und an der Hinterradachsplatte.

17. Vorrichtung gemäß zumindest Anspruch 1 oder 2, in welcher die Befestigungseinrichtung eine Klemmeinrichtung mit einem Klemmblock (98), mit einer hindurchführenden Bohrung aufweist, welche bemessen ist, die Trageinrichtung (99) gleitend aufzunehmen und mit einem Schlitz (100), welcher sich von einem Rand des Blocks durch den Block hindurch bis zu der Bohrung erstreckt und zwei Backen bildet;
im Gebrauch werden die Backen durch einen Hakenbolzen (102), welcher sich durch eine Bohrung in beiden Backen erstreckt, zusammengezogen und mit seinem hakenförmigen Ende an dem Fahrradrahmen befestigt, wobei der Hakenbolzen gegen den Klemmblock mit einer Gewindemutter oder ähnlicher Einrichtung festgespannt wird, welche auf einen Gewindeabschnitt an dem geraden Ende des Hakenbolzens aufgeschraubt wird, um die Trageinrichtung in Stellung festzuklemmen und gleichzeitig diese am Fahrradrahmen zu sichern;
in der normalen Gebrauchsstellung der Befestigungseinrichtung und des Fahrrades erfolgt diese Sicherung in der erforderlichen senkrechten Höhe in ihrem senkrechten Verstellbereich und so, daß der im wesentlichen waagerechte Teil der Befestigungseinrichtung in einer Ebene zu einem aufrechten Fahrrad in verschiedenen Winkeln zwecks seitlicher Verstellung befestigt werden kann, wobei ein oder mehrere derartige Klemmmittel verwendet werden, um die Trageinrichtung an zumindest einem der folgenden Teile des Fahrrades zu befestigen: an der zum Tretkurbellager führenden Hinterradgabel, an der zum Sattel führenden Hinterradgabel und an der Platte, welche die zum Tretkurbellager führende Hinterradgabel und die zum Sattel führende Hinterradgabel verbindet.

18. Vorrichtung gemäß Anspruch 15 oder 16, in welcher die Einrichtung zur Verstellung der Rotationsachse des Stützrades eine verstellbare, gesichert positionierbare Klemme aufweist, mit welcher das Stützrad an dem anderen Schenkel in einer gewünschten seitlichen Stellung befestigt wird.

19. Stützvorrichtung gemäß einem der Ansprüche 1 bis 18, in welcher Feder- oder andere Stoßdämpfungseinrichtungen für das Stützrad vorgesehen sind.

## Revendications

1. Appareil stabilisateur comprenant un dispositif de soutien soutenant une roue de stabilisation (6 ; 11 ; 41 ; 49 ; 85 ; 91 ; 103) ou un autre dispositif de roulement en contact avec le sol ayant un axe de rotation, et un dispositif de montage (1, 9, 10 ; 18 ; 36 ; 58 ; 60; 78 ; 98) destiné à monter le moyen de soutien sur une bicyclette ; caractérisé en ce que ledit dispositif, en contact avec le sol, peut être réglé latéralement, de manière sûre, en étant rapproché ou éloigné horizontalement ou sensiblement horizontalement de tout plan vertical qui coupe ledit dispositif de montage et se trouve orienté dans une direction normale d'avance de la bicyclette quand ledit appareil se trouve dans sa position normale de fonctionnement sur une bicyclette verticale : grâce à quoi, après ledit réglage latéral dudit dispositif en contact avec le sol, a son axe de rotation qui reste, ou qui est réglable pour venir à angles droits ou sensiblement à angles droits dudit plan.

2. Appareil selon la revendication 1 dans lequel, lorsque ledit appareil est dans sa position normale de fonctionnement, ladite roue de stabilisation ou autre dispositif en contact avec le sol peut être placé de manière sûre sensiblement à la verticale, de manière que l'axe de rotation dudit dispositif en contact avec le sol, puisse être amené en plus d'une position à cordonnées latérale et verticale dans ses plages combinées de réglage latéral et vertical quand ledit appareil est dans sa position normale de fonctionnement sur une bicyclette verticale et lorsque l'on regarde cette bicyclette de l'avant ou de l'arrière.

3. Appareil selon une des revendications 1 ou 2, dans lequel le réglage latéral dudit dispositif en contact avec le sol, par rapport audit plan vertical, se fait au moyen d'un réglage de pivotement vers l'arrière ou vers l'avant du moyen de soutien (47 ; 59) dans le moyen de montage (48 ; 60) autour d'un axe vertical ou sensiblement vertical ; un autre moyen pivotant (57 ; 65), ayant un axe de pivotement parallèle audit axe vertical ou sensiblement vertical, est encore monté a l'extrémité extérieure du moyen de soutien, en étant encore plus écarté du moyen de montage, pour permettre à l'axe du plan de la roue de stabilisation d'être à nouveau aligné parallèlement au plan du moyen de montage ou de la bicyclette après chaque réglage en pivotement du moyen de soutien, et des moyens de fixation dans les deux positions souhaitées du réglage pivotant (figure 4).

4. Appareil selon la revendication 1, dans lequel le réglage latéral de ladite roue de stabilisation se fait en montant cette roue de manière qu'elle soit réglable et puisse être fixée n'importe où le long d'une partie d'essieu (4 ; 35'), du moyen de soutien (2 ; 3 ; 13 ; 35), lequel s'étend et se trouve fixé sensiblement à angles droits du cadre de la bicyclette sur laquelle il est fixé.

5. Appareil selon la revendication 4, dans lequel ledit essieu est la branche horizontale (35') d'un moyen de soutien sensiblement en forme de L.

6. Appareil selon la revendication 1, dans lequel l'axe de rotation est légèrement incliné, par rapport à l'horizontale, de manière à modifier automatiquement la hauteur de la roue de stabilisation par rapport au sol, lorsqu'elle est rapprochée de la bicyclette à laquelle elle est fixée.

7. Appareil selon une quelconque des revendications 1 à 6, dans lequel ledit moyen de soutien peut être monté sur une bicyclette verticale, vue en plan, par un moyen de fixation à pince sur au moins l'un des éléments suivants : fourche arrière, support de chaîne, et plaque reliant le support de chaîne à la fourche arrière, de la bicyclette.

8. Appareil selon une quelconque des revendications 1 à 7, sur lequel est monté un bras de soutien partant latéralement du moyen de soutien et en ayant une longueur réglable, jusqu'à une distance latérale souhaitée de la bicyclette et susceptible d'être fixé dans la position d'utilisation voulue.

9. Appareil selon une quelconque des revendications 1 à 8, dans lequel le moyen de montage (102) est construit sous forme d'une partie intégrée à la bicyclette, le moyen de soutien étant amovible dans ce cas.

10. Appareil selon la revendication 1, dans lequel le moyen de montage comprend, en service, une plaque orientée sensiblement à l'horizontale, susceptible d'être amenée, au moyen d'une ouverture sur l'axe de la roue arrière de la bicyclette et d'être maintenue sur cet axe par un écrou et ayant une extrémité recourbée sur lui-même pour former, sur une vue en plan, une pince en forme de boucle, ouverte à l'extrémité autour du périmètre de la branche verticale du moyen de soutien, à serrage réglable pour maintenir le moyen de soutien dans une quelconque position souhaitée de réglage.

11. Appareil selon une quelconque des revendications 1 à 10, dans lequel, en plus de ladite roue de stabilisation ci-dessus (11 ; 41) ou d'un autre moyen de roulement en contact avec le sol (désigné ci-après par roue principale de stabilisation), une roue supplémentaire de stabilisation ou roue de secours (14 ; 43) de plus petit diamètre que la roue principale de stabilisation est montée latéralement vers l'extérieur de la roue principale de stabilisation, de manière qu'au moment où la roue principale de stabilisation a été réglée plus près de l'axe principal du cadre de la bicyclette ou du tricycle, si l'inclinaison de la bicyclette dépasse l'inclinaison que la roue principale de stabilisation est capable de compenser, et si la bicyclette commence à basculer, alors ladite roue de secours plus petite est telle qu'elle vient en contact avec le sol et exerce un moment supplémentaire de rétablissement et signale l'inclinaison au cycliste et empêche aussi à l'extrémité du bras de soutien de s'accrocher sur le sol.

12. Appareil selon la revendication 1, dans lequel le moyen de montage est en deux ou trois parties, la partie soutenant le moyen de soutien étant soit fixée inclinée, soit inclinable, soit en angle, afin que la variation de l'espace vertical, entre la roue de stabilisation et le sol, lorsque la bicyclette est verticale, soit effectuée automatiquement quand la roue de stabilisation est rapprochée de la roue arrière de la bicyclette, sans qu'aucun réglage vertical du moyen de soutien dans le moyen de montage soit nécessaire.

13. Appareil stabilisateur selon une quelconque des revendications 1 à 12, comprenant encore des moyens qui émettent un bruit lorsque la roue de stabilisation vient en contact avec le sol.

14. Appareil stabilisateur selon une quelconque des revendications 1 à 13, dans lequel ledit moyen respectif de soutien, ledit moyen de montage et la roue de stabilisation remplace chacune des deux roues latéralement opposes d'un tricycle et sont montées de manière que les deux roues de stabilisation soient réglables latéralement en se rapprochant et en s'éloignant l'une de l'autre.

15. Appareil stabilisateur selon la revendication 1, dans laquelle le moyen de soutien comprend un élément sensiblement en forme de L, ayant deux branches, et lequel en service est placé avec sa première branche sensiblement parallèle audit plan vertical et sa seconde branche sensiblement horizontale quand le cycle est dans sa position normale verticale d'utilisation.

16. Appareil stabilisateur selon la revendication 15, dans lequel ladite première branche est immobilisée sur au moins l'un des éléments suivants : fourche arrière, support de chaîne et plaque de l'axe de roue arrière du cadre de bicyclette par lesdits moyens de soutien.

17. Appareil selon au moins l'une des revendications 1 ou 2, dans lequel ledit moyen de montage comprend un moyen d'immobilisation comportant un bloc d'immobilisation (98) traversé par un orifice dimensionné pour s'adapter en coulissement sur le moyen de soutien (99) et avec une fente (100) s'étendant d'un bord dudit bloc en passant par ledit orifice pour former deux prolongements dudit bloc ; lesdits prolongements étant rapprochés en service au moyen d'un crochet formant boulon (102) qui traverse un orifice des deux dits prolongements, et se trouve serré avec son extrémité crochue contre le cadre de la bicyclette, ledit crochet à vis étant serré contre ledit bloc d'immobilisation par un écrou, ou autre moyen fileté semblable vissé sur une partie filetée de l'extrémité rectiligne du crochet à vis, afin d'immobiliser le moyen de soutien en place et, en même temps, de le fixer sur le cadre de la bicyclette ; dans les positions d'utilisation normales du moyen d'immobilisation et de la bicyclette, cette fixation est, au niveau vertical, voulue de sa plage de réglage verticale, et de manière que la partie sensiblement horizontale du moyen de soutien puisse être fixée sous différents angles dans un plan à la bicyclette verticale, pour effectuer un réglage latéral ; un ou plusieurs moyens d'immobilisations de ce type servant à immobiliser le moyen de soutien sur l'un au moins parmi : un support de chaîne, une fourche arrière ou une plaque qui relie le support de chaîne et la fourche arrière de la bicyclette.

18. Appareil stabilisateur selon l'une des revendications 15 ou 16, dans lequel ledit moyen de réglage de l'axe de rotation de ladite roue de stabilisation comprend une pincé réglable pouvant être fixée en position régalble et en sécurité, grâce à laquelle ladite roue de stabilisation est fixée sur ladite autre branche en une position latérale souhaitée.

19. Appareil stabilisateur selon une quelconque des revendications 1 à 18, dans lequel un ressort ou autre dispositif absorbant les chocs est prévus pour la roue de stabilisation.
